(19) Europäisches Patentamt
European Patent Office
Office européen des brevets

(11) **EP 2 974 943 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(51) Int Cl.:
**B60W 10/20** *(2006.01)*        **B62D 15/02** *(2006.01)*
**B60W 30/12** *(2006.01)*        **B60W 30/10** *(2006.01)*

(21) Anmeldenummer: **15001136.9**

(22) Anmeldetag: **17.04.2015**

(54) **QUERFÜHRUNGSSYSTEM ZUR ADAPTIVEN, AUTOMATISIERTEN QUERFÜHRUNG EINES FAHRZEUGS**

TRANSVERSE GUIDANCE SYSTEM FOR ADAPTIVE AUTOMATED TRANSVERSE GUIDANCE OF A VEHICLE

GUIDAGE TRANSVERSAL AUTOMATISÉ ADAPTATIF POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2014 DE 102014009415**

(43) Veröffentlichungstag der Anmeldung:
**20.01.2016 Patentblatt 2016/03**

(73) Patentinhaber: **MAN Truck & Bus AG**
**80995 München (DE)**

(72) Erfinder:
• **Völl, Sebastian**
**85221 Dachau (DE)**
• **Schwertberger, Walter**
**82278 Althegnenberg (DE)**
• **Römersperger, Xaver**
**84453 Mühldorf (DE)**
• **Peters, Samuel**
**80687 München (DE)**
• **Reule, Michael**
**85354 Freising (DE)**
• **Kraus, Sven**
**85748 Garching (DE)**

(74) Vertreter: **Liebl, Thomas et al**
**Neubauer - Liebl - Bierschneider**
**Patentanwälte**
**Münchener Straße 49**
**85051 Ingolstadt (DE)**

(56) Entgegenhaltungen:
**EP-A1- 2 374 693        EP-A1- 2 495 156**
**WO-A1-2013/128638      DE-A1-102012 104 036**
**US-A1- 2011 231 063     US-A1- 2013 197 758**

EP 2 974 943 B1

**Beschreibung**

Querführungssystem zur adaptiven automatisierten Querführung eines Fahrzeugs.

Gegenstand der Erfindung ist eine Anordnung zur adaptiven automatisierten Querführung eines Fahrzeugs, mit einem Fahrspurerfassungssystem das eine Fahrspur erfasst, einem Fahrzeuglageerfassungssystem das die Fahrzeug-Ist-Lage relativ zu der Fahrspur erfasst, einem Regler-System, das aus der Fahrzeug-Ist-Lage relativ zu der Fahrspur und einer Fahrzeug-Soll-Lage relativ zu der Fahrspur eine Regelabweichung und daraus ein Stellsignal ermittelt und einem Lenkaktuator den das Regler-System so mit dem Stellsignal beaufschlagt, dass die Fahrzeug-Ist-Lage auf die Fahrzeug-Soll-Lage eingeregelt wird.

Serienmäßig verfügbar im Nutzfahrzeug sind derzeit Spurverlassenwarnsysteme, die den Fahrer eines Fahrzeugs beim Verlassen eines Fahrstreifens warnen. Die Warnung erfolgt dabei durch akustische, optische oder haptische Signale jeweils einzeln oder in beliebiger Kombination. Eine Weiterentwicklung der Spurverlassenwarnsysteme stellen automatisierte Querführungssysteme dar, wie sie in unterschiedlicher Ausführung bereits beschrieben wurden. Derartige Querführungssysteme lenken das Fahrzeug ohne aktiven Fahrereingriff einen Fahrstreifen entlang. Sie haben das Potential, die Verkehrssicherheit zu steigern, indem sie den Fahrer beim Führen des Fahrzeugs unterstützen bzw. entlasten.

Ein automatisches Querführungssystem der vorstehend genannten Art ist zum Beispiel in der DE 10210548 A1 beschrieben. Dort ist zur Querführung eine Sensoreinrichtung bestehend aus Videokamera und Bildverarbeitungssystem vorgesehen, um den Istwert für die Querposition des Kraftfahrzeugs zu ermitteln, eine Vorgabeeinrichtung zur Vorgabe eines Sollwertes für die Querposition des Kraftfahrzeugs, eine Verarbeitungseinrichtung zur Ausgabe eines durch einen Soll- Ist-Vergleich gebildeten Ausgangssignals, und ein Lenkungsstellglied, das durch das Ausgangssignal der Verarbeitungseinrichtung angesteuert wird und in die Fahrzeuglenkung eingreift, um die Querposition des Kraftfahrzeugs auf den Sollwert zu regeln.

Der Lenkaktuator (Lenkungsstellglied) kann somit unabhängig vom Fahrer ein Lenkmoment auf die gelenkten Räder aufbringen und so einen bestimmten Lenkwinkel einstellen. Problematisch ist dabei, dass die Lenkeingriffe des Lenkaktuators direkt vom Fahrer über das Lenkrad wahrgenommen werden, wodurch der Lenkkomfort für den Fahrer unmittelbar negativ beeinflusst wird.

Um eine hohe Akzeptanz eines Querführungssystems zu erreichen, müssen daher die Intensität und die Häufigkeit oder technisch gesprochen die Amplitude und die Frequenz der Lenkeingriffe und die Genauigkeit der Spurführung exakt aufeinander abgestimmt sein. Eine hohe Genauigkeit der Spurführung bedingt eine hohe Stellaktivität des Lenkaktuators, was wiederum Komforteinbußen für den Fahrer zur Folge hat. Die Genauigkeit der Spurführung und der Lenkkomfort für den Fahrer stellen damit konträre Auslegungsgrößen des Querführungssystems dar.

Aus der US 2011/0231063 A1 ist ein Verfahren zum Einstellen einer Basisfolgeposition durch ein Spurhalteregelungssystem bekannt. Dabei wird in Verbindung mit einer einzigen Regelstrategie überprüft, ob die Krümmung einer Straße größer als ein vorbestimmter Krümmungswert, ob der Fahrer das Fahrzeug übersteuert und ob ein bestimmter seitlicher Versatz vorliegt. Wird eines dieser Kriterien nicht erfüllt, wird die Spurmitte als Basisfolgeposition eingestellt, ansonsten wird die vom Fahrer bevorzugte Position beibehalten. Es wird also eine Spurhalteregelungsfunktion unter Reflexion einer Fahrtendenz eines Fahrers durchgeführt, wobei ein Übersteuern eines Fahrers erfasst werden soll, eine Basisfolgeposition auf der Grundlage des erfassten Übersteuerns eines Fahrers eingestellt werden soll und eine Regelung derart ausgeführt werden soll, dass ein Fahrzeug der eingestellten Basisfolgeposition folgt. Das Dokument US 2011/0231063 A1 ist als nächstliegender Stand der Technik nach dem Oberbegriff des Anspruchs 1 zu sehen.

Ausgehend vom Stand der Technik ist es Aufgabe der Erfindung, ein Querführungssystem zur adaptiven automatisierten Querführung eines Fahrzeugs vorzuschlagen, das fahrsituationsbezogen, also adaptiv, die Amplitude und Frequenz der Lenkeingriffe und die Genauigkeit der Spurführung exakt aufeinander abstimmt.

Gelöst wird die Aufgabe durch die Merkmale der unabhängigen Ansprüche. Vorteilhafte Ausgestaltungen sind Gegenstand der darauf rückbezogenen Unteransprüche. Erfindungsgemäß ist ein Querführungssystem vorgesehen, das neben den Systemkomponenten Fahrspurerfassungssystem, Fahrzeuglageerfassungssystem, Regler-System und Lenkaktuator so ausgebildet ist, dass das Regler-System wenigstens zwei Regler oder wenigstens einen Regler mit wenigstens zwei Parametersätzen enthält, wobei die jeweils durch die Regler oder jeweils durch die Parametersätze erzeugten Regelcharakteristiken unterschiedlich sind. Weiter ist ein Regler-Auswahlsystem vorgesehen, das mit Hilfe von Hilfseinrichtungen wenigstens eine die Fahrsituation beeinflussende Größe erfasst und, je nach Wert der wenigstens einen Größe, einen der Regler oder einen der Parametersätze zur Verwendung im Regler-System auswählt und das Regler-System unter Verwendung des ausgewählten Reglers oder des ausgewählten Parametersatzes ein Stellsignal an den Lenkaktuator ausgibt. Mit dem erfindungsgemäß ausgebildeten Querführungssystem lässt sich, durch die fahrsituationsbezogene Auswahl eines jeweils geeigneten Reglers oder Parametersatzes, vorteilhaft eine deutliche Verbesserung des Lenkkomforts erzielen.

Es wird ausdrücklich darauf hingewiesen, dass die vorstehend und auch nachfolgend beschriebenen Systemkomponenten, nämlich das Fahrspurerfassungssystem, das Fahrzeuglageerfassungssystem, das Regler-System, die Regler, der Lenkaktuator und das Regler-Auswahlsystem nicht zwangsläufig als Hardwarekomponenten ausgeführt sein müssen. Es ist vielmehr denkbar, derartige Komponenten als Softwareroutinen auszubilden, die mittels Recheneinheiten ausgeführt werden und sich vorhandener Hardwarekomponenten wie Sensoren, Aktuatoren, usw. bedienen. Moderne Fahrzeuge verfügen in der Regel über mehrere solcher Recheneinheiten, die zur Datenübertragung miteinander vernetzt sind und unterschiedlichste Steuer-, Regel-, Analyse-, Überwachungs- und Datenübertragungsroutinen ausführen. Ebenso sind in heute üblichen Fahrzeugen eine Vielzahl von Sensoren und Aktuatoren eingesetzt, die sich zum Teil für unterschiedliche Zwecke nutzen lassen. Die Begriffe Sensoren und Aktuatoren sind dabei in ihrer allgemeinsten Bedeutung zu verstehen.

Unter dem oben verwendeten Begriff "Hilfseinrichtungen" ist analog zu verstehen, dass in der Fahrzeuginfrastruktur vorhandene Recheneinheiten Sensoren, Positionsbestimmungseinrichtungen, Kommunikationseinrichtungen usw. von Softwareroutinen temporär dazu benutzt werden, fahrsituationsbestimmende Informationen zu gewinnen. Der vorstehend und auch nachfolgend verwendete Begriff "Werte" bedeutet nicht zwangsläufig, dass es sich um einen diskreten Zahlenwert handeln muss, es sind darunter auch Kategorien wie groß, klein, kurvenreich, starke Fahrbahnneigung, usw. zu verstehen.

In Weiterbildung des erfindungsgemäßen Querführungssystems ist vorgesehen, dass bei Übergang von einem aktuell verwendeten Regler auf einen neu zu verwendenden Regler oder einem aktuell verwendeten Parametersatz auf einen neu zu verwendenden Parametersatz, das Regler-Auswahlsystem, abhängig von dem jeweiligen Übergang, eine Übergangscharakteristik ermittelt und eine Stellsignal-Modifikationseinheit beaufschlagt, derart, dass diese temporär ein modifiziertes Stellsignal erzeugt und damit den Lenkaktuator beaufschlagt. Hierdurch lässt sich vorteilhaft erreichen, dass Übergänge in der Reglercharakteristik komfortverbessernd gestaltbar sind.

Die Regelcharakteristik, erzeugt durch wenigstens einen der wenigstens zwei Regler oder wenigstens einen der wenigstens zwei Parametersätze, ist erfindungsgemäß auf eine enge Führung des Fahrzeugs an der Fahrzeug-Soll-Lage ausgelegt und die Regelcharakteristik, erzeugt durch wenigstens einen weiteren der wenigstens zwei Regler oder wenigstens einen weiteren der wenigstens zwei Parametersätze, ist erfindungsgemäß auf eine lose, komfortbetonte Führung des Fahrzeugs an der Fahrzeug-Soll-Lage ausgelegt, bei der die Amplitude und Frequenz der Lenkeingriffe deutlich geringer ausfällt. So lassen sich Sicherheitsaspekte und Komfortaspekte gleichermaßen abdecken.

Als fahrsituationsbestimmende Größen können einzeln oder in beliebiger Kombination die Fahrzeuggeschwindigkeit, die Fahrzeugmasse, die Querbeschleunigung des Fahrzeugs, der Lenkwinkel des Fahrzeugs relativ zum Fahrstreifenverlauf, der Gierwinkel des Fahrzeugs relativ zum Fahrstreifenverlauf, die Fahrstreifenkrümmung, die Fahrbahnneigung, die Rauheit des Straßenbelags, die Fahrstreifenbreite, die ist-Position des Fahrzeugs im Fahrstreifen die Außentemperatur, die Windverhältnisse, die Straßennässe und die Sichtbedingungen mittels der vorstehend angesprochenen Hilfseinrichtungen vorteilhaft erfasst und von dem Regler-Auswahlsystem zur Bestimmung des zu verwendenden Reglers herangezogen werden.

Ebenfalls fahrsituationsbestimmend für zukünftige Fahrsituation können Informationen zum rückwärtigen, seitwärtigen und entgegenkommenden Verkehr, zur aktuellen und vorausliegenden Verkehrslage, sowie zum aktuellen und weiteren Straßenverlauf sein. Diese lassen sich über Fahrzeugsensoren, eine Fahrzeug zu Fahrzeug Kommunikation oder eine Fahrzeug zu Infrastruktur Kommunikation erlangen oder, hinsichtlich des aktuellen und vorausliegenden Straßenverlaufs, durch ein Navigationssystem.

Das Regler-Auswahlsystem nimmt dabei die Reglerauswahl vorteilhaft nach wenigstens einer der folgenden Grundbeziehungen vor:

- hohe Fahrzeuggeschwindigkeit, enge Führung des Fahrzeugs an der Fahrzeug-Soll-Lage,

- geringe Fahrzeuggeschwindigkeit, lose Führung des Fahrzeugs an der Fahrzeug-Soll-Lage,

- hohe Fahrzeugmasse, enge Führung des Fahrzeugs an der Fahrzeug-Soll-Lage,

- geringe Fahrzeugmasse, lose Führung des Fahrzeugs an der Fahrzeug-Soll-Lage,

- hohe Querbeschleunigung des Fahrzeugs, enge Führung des Fahrzeugs an der Fahrzeug-Soll-Lage,

- geringe Querbeschleunigung des Fahrzeugs, lose Führung des Fahrzeugs an der Fahrzeug-Soll-Lage,

- großer Lenkwinkel, enge Führung des Fahrzeugs an der Fahrzeug-Soll-Lage,

- kleiner Lenkwinkel, lose Führung des Fahrzeugs an der Fahrzeug-Soll-Lage,

- großer Gierwinkel, enge Führung des Fahrzeugs an der Fahrzeug-Soll-Lage,

- kleiner Gierwinkel, lose Führung des Fahrzeugs an der Fahrzeug-Soll-Lage,

- große Fahrstreifenkrümmung, enge Führung des Fahrzeugs an der Fahrzeug-Soll-Lage,

- kleine Fahrstreifenkrümmung, lose Führung des Fahrzeugs an der Fahrzeug-Soll-Lage,

- große Fahrbahnneigung, enge Führung des Fahrzeugs an der Fahrzeug-Soll-Lage,

- kleine Fahrbahnneigung, lose Führung des Fahrzeugs an der Fahrzeug-Soll-Lage,

- geringe Rauheit des Straßenbelags, enge Führung des Fahrzeugs an der Fahrzeug-Soll-Lage,

- hohe Rauheit des Straßenbelags, lose Führung des Fahrzeugs an der Fahrzeug-Soll-Lage,

- kleine Fahrstreifenbreite, enge Führung des Fahrzeugs an der Fahrzeug-Soll-Lage,

- große Fahrstreifenbreite, lose Führung des Fahrzeugs an der Fahrzeug-Soll-Lage,

- große Ablage der Ist-Position des Fahrzeugs von seiner Soll-Position im Fahrstreifen, enge Führung des Fahrzeugs an der Fahrzeug-Soll-Lage,

- geringe Ablage der Ist-Position des Fahrzeugs von seiner Soll-Position im Fahrstreifen, lose Führung des Fahrzeugs an der Fahrzeug-Soll-Lage,

- Außentemperatur unter dem Gefrierpunkt, enge Führung des Fahrzeugs an der Fahrzeug-Soll-Lage,

- Außentemperatur über dem Gefrierpunkt, lose Führung des Fahrzeugs an der Fahrzeug-Soll-Lage,

- überholendes Fahrzeug von hinten oder im Seitenbereich oder auf Fahrzeughöhe, enge Führung des Fahrzeugs an der Fahrzeug-Soll-Lage,

- Baustelle vorausliegend, enge Führung des Fahrzeugs an der Fahrzeug-Soll-Lage,

- kurvenreicher Straßenverlauf vorausliegend, enge Führung des Fahrzeugs an der Fahrzeug-Soll-Lage,

- gerader Straßenverlauf vorausliegend, lose Führung des Fahrzeugs an der Fahrzeug-Soll-Lage,

- nasse Fahrbahn, enge Führung des Fahrzeugs an der Fahrzeug-Soll-Lage,

- schlechte Sicht, enge Führung des Fahrzeugs an der Fahrzeug-Soll-Lage

- starker Wind, enge Führung des Fahrzeugs an der Fahrzeug-Soll-Lage

- auftauchendes Objekt am Straßenrand, enge Führung des Fahrzeugs an der Fahrzeug-Soll-Lage.

Unter dem Begriff Grundbeziehung ist dabei lediglich der grundsätzliche Zusammenhang zwischen der jeweiligen die Fahrsituation beeinflussenden Größe und der Reglercharakteristik zu verstehen. Selbstverständlich ist es möglich zwischen einer engen Führung des Fahrzeugs an der Fahrzeug-Soll-Lage und einer losen Führung des Fahrzeugs an der Fahrzeug-Soll-Lage, also den beiden gegensätzlichen Extremen der Regelercharakteristik, beliebig viele Zwischenstufen vorzusehen, die bei entsprechenden Werten der die Fahrsituation beeinflussenden Größe auswählbar sind.

Ebenso kann es bei Erfassung der Werte mehrerer Größen für die Bestimmung des Reglers oder des Parametersatzes von Vorteil sein, die Werte gewichtet in die Reglerauswahl einzubeziehen. Dazu kann das Regler-Auswahlsystem die erfassten Werte, abhängig von der Gewichtung der Größen, mit dieser Gewichtung verrechnen, aus den gewichteten Werten einen Gesamtwert ermitteln und daraus den zu verwendenden Regler bestimmen.

Ein Werkzeug zur automatischen Klassifikation von Datenobjekten der vorstehend genannten Art und damit zur Lösung von Entscheidungsproblemen sind Entscheidungsbäume. Die Nutzung von Entscheidungsbäumen zur Reglerauswahl bietet sich deshalb ebenfalls an. Von besonderem Vorteil ist es, bei Erfassung der Werte einer größeren Anzahl von Größen, das Regler-Auswahlsystem für die Bestimmung des Reglers oder des Parametersatzes mit einem künstlichen neuronalen Netz auszustatten. Wie aus der einschlägigen Fachliteratur bekannt, ist es besonders effizient, Entscheidungsbäume zur Generierung von Teilen neuronaler Netze zu nutzen, indem so genannte TBNN (Tree-Based Neural Network) die Regeln der Entscheidungsbäume in die neuronalen Netze übersetzen.

Bei Übergang von einem Regler oder Parametersatz, der eine lose Führung des Fahrzeugs an der Fahrzeug-Soll-Lage bewirkt, auf einen Regler oder Parametersatz der eine enge Führung des Fahrzeugs an der Fahrzeug-Soll-Lage bewirkt, ist es aus Sicherheitsaspekten vorteilhaft, durch das Regler-Auswahlsystem ein direktes, instantanes Umschalten der Regler oder Parametersätze vorzunehmen.

Handelt es sich hingegen um einen Übergang von einem Regler oder Parametersatz, der eine enge Führung des Fahrzeugs an der Fahrzeug-Soll-Lage bewirkt, auf einen Regler oder Parametersatz der eine lose Führung des Fahrzeugs an der Fahrzeug-Soll-Lage bewirkt, hat es sich als deutlich komfortsteigernd und damit vorteilhaft erwiesen, wenn das Regler-System für eine vorgebbare Zeit Δt ein modifiziertes Stellsignal auf den Lenkaktuator schaltet. Nach Ablauf der Zeit Δt verwendet das Regler-System dann den Regler oder Parametersatz zur Bildung des Stellsignals, der eine lose Führung des Fahrzeugs an der Fahrzeug-Soll-Lage bewirkt.

Die Modifikation des Stellsignals erfolgt dabei vorteilhaft so, dass innerhalb der Zeit Δt ein allmählicher Übergang von der Regelcharakteristik des Reglers oder Parametersatzes, der eine enge Führung des Fahrzeugs an der Fahrzeug-Soll-Lage bewirkt, auf die Regelcharakteristik des Reglers oder Parametersatzes, der eine lose Führung des Fahrzeugs an der Fahrzeug-Soll-Lage bewirkt, nachgebildet wird.

Hinsichtlich der Zeit Δt ist es von Vorteil, wenn diese abhängig vom Wert wenigstens einer erfassten Größe ermittelt wird, um den Komfort beim Übergang zu optimieren.

In Weiterbildung des Querführungssystems kann es von Vorteil sein, im Regler-Auswahlsystem für eine oder mehrere der erfassten Größen Wertebereiche zu definieren, für die spezielle Verfahrensweisen gelten. So kann das Regler-Auswahlsystem, dann, wenn der oder die Werte der einen oder der mehreren erfassten Größen im vordefinierten Wertebereich liegen, zwei Regler oder zwei Parametersätze auswählen und die Stellsignal-Modifikationseinheit anweisen, ein modifiziertes Stellsignal durch Interpolation zwischen den Stellsignalen der beiden Regler zu bilden und auf den Lenkaktuator aufzuschalten. Ein solcher Fall liegt zum Beispiel in langgezogenen Kurven vor.

Um dem Fahrzeugführer eine Eingriffsmöglichkeit in die Regelcharakteristik des Regler-Systems zu geben, ist es von Vorteil, ein durch den Fahrzeugführer bedienbares, auf das Regler-Auswahlsystem wirkendes Schaltorgan vorzusehen, mittels dem die Auswahl des Reglers oder Parametersatzes beeinflussbar ist. Von besonderem Vorteil ist es dabei, wenn das Schaltorgan tendenzbildend wirkt, also tendenziell eine engere oder losere Führung des Fahrzeugs an der Fahrzeug-Soll-Lage bewirkt.

Vorteilhaft einsetzbar ist das erfindungsgemäße Querführungssystem in Fahrzeugen, insbesondere Nutzfahrzeugen.

Weitere Ausgestaltungen und Vorteile der Erfindung werden nachfolgend anhand der Zeichnung näher erläutert, die eine Fahrzeuglenkung mit einem Querführungssystem in Funktionsblockdarstellung zeigt.

Die Darstellung in der Figur zeigt eine Fahrzeuglenkung mit einem Querführungssystem 1 zur adaptiven automatisierten Querführung eines Fahrzeugs in Form von Funktionsblöcken, in einer Prinzipdarstellung. Hier ist zu beachten, dass es sich bei den Funktionsblöcken nicht zwangsläufig um als Hardware vorhandene Einheiten handelt. Wie für die meisten heute in Fahrzeugen zu bewältigenden Steuer- und Regelungsaufgaben werden vielmehr Programme verwendet, die auf einer oder mehreren Recheneinheiten des Fahrzeugs implementiert sind und die in der Abbildung in Form von Funktionsblöcken dargestellten Funktionen temporär ausbilden, wobei sie sich der im Fahrzeug vorhandene Hardwarestruktur wie Sensoren, Aktuatoren, Kommunikationseinheiten usw. bedienen.

Bei heute gebräuchlichen, nicht schienengebundenen Landfahrzeugen, insbesondere Straßenfahrzeugen, erfolgt die Lenkung, indem ein Fahrzeugführer 2 über ein Lenkrad 3, das, wie durch einen ersten Wirkpfeil 5 angedeutet, mit einer Servo-Einrichtung 4 mechanisch verbunden ist, ein Lenkmoment auf diese aufbringt. Die Servo-Einrichtung 4 ihrerseits wirkt, wie durch einen zweiten Wirkpfeil 6 angedeutet, auf eine mechanische Lenkeinrichtung 7. Die vorstehend beschriebene Wirkungskette vermittelt dem Fahrzeugführer eine taktile Rückmeldung, indem sie jedem vom Fahrzeugführer aufgebrachten Lenkmoment eine Gegenkraft entgegensetzt, die dem Fahrer einen "Kontakt" zur Fahrbahn vermittelt. Dieses Rückmoment ist durch den Rückwirkpfeil 8 angedeutet. Wird nun ein Querführungssystem 1 eingesetzt, so liegt an dessen Ausgang ebenfalls ein Lenkmoment an, wie dies durch den dritten Wirkungspfeil 9 angedeutet ist. Da sich das Lenkmoment, das der Fahrzeugführer 2 auf die Servo-Einrichtung 4 aufbringt und das durch das Querführungssystem 1 auf die Servo-Einrichtung 4 aufgebrachte Lenkmoment in dieser überlagern, stimmt die taktile Wahrnehmung des Fahrzeugführers 2 nicht mehr mit dem gewohnten "Fahrgefühl" überein, weil einerseits die gefühlte Gegenkraft eine andere ist und andererseits die auf die aufgebrachte Lenkbewegung des Fahrzeugführers 2 folgende Lenkwirkung nicht mit der erwarteten überein stimmt. Zur Abmilderung dieser bei Fahrzeugen der vorstehend genannten Art auftretenden Komforteinbußen ist es notwendig, die Frequenz und Stärke der Lenkeingriffe durch das Querführungssystem so zu gestalten, dass das für den Fahrer gewohnte Lenkgefühl weitgehend erhalten bleibt.

Im Beispiel nach der Figur wird angenommen, dass, wie bei Querführungssystemen üblich, ein Spurerfassungssystem 10 vorgesehen ist. Dieses weist eine Kameraeinrichtung 11 als Sensoreinheit, ein Fahrspurerfassungssystem 12, das eine Fahrspur erfasst, und ein Fahrzeuglageerfassungssystem 13, das die Fahrzeug-Ist-Lage relativ zu der Fahrspur erfasst, auf. Derartige Spurerfassungssysteme sind geläufig, so dass sich eine detaillierte Beschreibung erübrigt. Es soll lediglich darauf hingewiesen werden, dass bei solchen Systemen eine Analyse der zeitsequentiell durch die Kameraeinrichtung 11 erfassten Bilder durchgeführt wird, wobei die Fahrspur definierende Bildinhalte erfasst werden und mit dieser Information eine Fahrspur definiert wird (Fahrspurerfassungssystem 12). Basierend auf dieser erfassten Fahrspur wird aus der Lage der Fahrspur zur Kameraeinrichtung 11, deren Anbringungsort am Fahrzeug und deren Abbildungseigenschaften bekannt sind, die relative Lage des Fahrzeugs zur Fahrspur ermittelt (Fahrzeuglageerfassungssystem 13).

Im Regler-System 14 erfolgt gemäß dem Beispiel nach der Figur eine Verarbeitung der Fahrzeug-Ist-Lage aus dem Spurerfassungssystem 10 und einer im Querführungssystem 1 definierten Fahrzeug-Soll-Lage "S" zu einer Regelabweichung, die im Regler-System 14 zu einem Stellsignal verarbeitet wird, wie dies unten noch näher beschrieben ist.

Mit Ausnahme der Kameraeinrichtung 11 sind die oben angesprochenen und in der Abbildung als Funktionsblöcke gezeigten Funktionseinheiten Spurerfassungssystem 10, Fahrspurerfassungssystem 12, Fahrzeuglageerfassungssystem 13, Regler-System 14 und natürlich die Verarbeitung der Fahrzeug-Ist-Lage und einer im Querführungssystem 1 definierten Fahrzeug-Soll-Lage zu einer Regelabweichung sämtlich programmgestützte Abläufe, die auf einer Recheneinheit ausgeführt werden, derart, dass die vorstehend genannten Funktionsblöcke temporär ausgebildet werden.

Um die Fahrzeug-Ist-Lage auf die Fahrzeug-Soll-Lage einzuregeln, wird, wie erwähnt, das Regler-System 14 verwendet, das aus der Regelabweichung ein Stellsignal ermittelt und damit einen Lenkaktuator 15 beaufschlagt, derart, dass die Fahrzeug-Ist-Lage auf die Fahrzeug-Soll-Lage eingeregelt wird.

Um die oben erwähnten negativen Einflüsse auf den Lenkkomfort abzumildern, die durch das Eingreifen des Querführungssystems 1 in die Lenkeinrichtung 7 entstehen, ist das Regler-System 14 mit einer Mehrzahl von Regelcharakteristiken ausgestattet, die in der Figur mit $R_1$ bis $R_N$ bezeichnet sind. Hierzu kann das Regler-System "N" Regler oder einen Regler mit "N" Parametersätzen enthalten, die jeweils die angesprochenen unterschiedlichen Regelcharakteristiken erzeugen.

Um das Regler-System 14, so zu betreiben, dass die Zahl der Lenkeingriffe in Frequenz und Intensität minimiert wird, erfolgt die Auswahl der Regelcharakteristik ($R_1$ bis $R_N$) in Abhängigkeit von der Fahrsituation. Hierzu ist ein Regler-Auswahlsystem 16 vorgesehen, das über entsprechende Hilfseinrichtungen die Fahrsituation beeinflussende Größe erfasst. Im Beispiel sind dazu zwei Gruppen von Hilfseinrichtungen vorgesehen. Die erste Gruppe 17 umfasst die Hilfseinrichtungen 17.1 bis 17.N, die solche Größen erfassen, die fahrzeugbezogen sind, wie beispielsweise die Fahrzeuggeschwindigkeit, die Fahrzeugmasse, die Querbeschleunigung des Fahrzeugs, den Lenkwinkel relativ zum Fahrbahnverlauf, den Gierwinkel relativ zum Fahrbahnverlauf. Bei den zu dieser ersten Gruppe 17 gehörenden Hilfseinrichtungen 17.1, 17.2 und 17.N handelt es sich um Sensorabfragealgorithmen, mit deren Hilfe entsprechende Sensoren bekannter Art, die auch für andere Zwecke im Fahrzeug verbaut sind, in einem vorgegebenen Zeitraster nach ihrem aktuellen Wert abgefragt werden.

Die zweite Gruppe 18 umfasst solche Hilfseinrichtungen 18.1 bis 18.N, die nicht fahrzeugbezogene Informationen über Sensoren und Kommunikationseinrichtungen ermitteln. Zu dieser Gruppe 18 gehören beispielsweise die Fahrstreifenkrümmung, der Fahrstreifenverlassenswinkel, die Fahrstreifenbreite, die Ist-Position des Fahrzeugs im Fahrstreifen, jeweils ermittelt durch das oben erwähnte Spurerfassungssystem 10. Weiter gehören dazu, die Fahrbahnneigung ermittelt durch das Abfragen eines Neigungssensors, die Rauheit des Straßenbelags durch Abfrage zum Beispiel eines entsprechenden Ultraschallsensors, die Außentemperatur durch Abfrage eines entsprechenden Temperatursensors. Zur Ermittlung der möglichen zukünftigen Fahrsituation können auch Informationen zum rückwärtigen oder entgegenkommenden Verkehr, sowie zum weiteren Straßenverlauf dienen, die über eine Fahrzeug zu Fahrzeug Kommunikation oder durch eine Fahrzeug zu Infrastruktur Kommunikation erlangt werden, oder hinsichtlich des vorausliegenden Straßenverlaufs, durch ein Navigationssystem. Die Erlangung all dieser Informationen wurde bereits ausführlich in der einschlägigen Fachliteratur beschrieben, so dass es sich erübrigt, näher darauf einzugehen. Auch hier handelt es sich um auf Recheneinheiten implementierten Abfrage- und Auswertungsalgorithmen, mit denen Kommunikationseinrichtungen und Sensoren in einem vorgegebenen Zeitraster nach dem Vorliegen von Informationen oder den aktuellen Messwerten von Größen abgefragt werden.

Unter Berücksichtigung eines oder mehrerer der vorstehend angesprochenen Werte und einer oder mehrerer der vorstehend angesprochenen Informationen, gegebenenfalls in beliebiger Kombination, erfolgt dann die Auswahl der Regelcharakteristik $R_1$ bis $R_N$. Näheres hierzu ist weiter unten beschrieben. Ist die zukünftig zu verwendende Regelcharakteristik in Form eines bestimmten digitalen Reglers oder eines bestimmten Parametersatzes für einen digitalen Regler ausgewählt und unterscheidet sie sich von der bisher verwendeten Regelcharakteristik, wird je nach Situation unterschiedlich verfahren. Entweder es wird direkt auf die neue Regelcharakteristik umgeschaltet, indem instantan der ausgewählte Regler oder der ausgewählte Parametersatz verwendet wird oder das Regler-Auswahlsystem 16 bedient sich einer Stellsignal-Modifikationseinheit 19 um ein modifiziertes Stellsignal zu erzeugen. Dies kann dadurch geschehen, dass ein temporär die Stellsignal-Modifikationseinheit 19 ausbildender Algorithmus, der auf einer Recheneinheit des Fahrzeugs implementiert ist, aus dem Stellsignal, das sich aus der bisher verwendeten Regelcharakteristik ergibt und dem Stellsignal, das sich aus der neu zu verwendenden Regelcharakteristik ergibt, unter Zuhilfenahme einer Übergangsfunktion für ein vorgegebenes Zeitintervall Δt eine Reihe von Stellsignalen ermittelt und auf den Lenkaktuator 15 aufschaltet. Auf diese Weise wird - für den Fahrer ohne merklichen Sprung - von einer Regelcharakteristik auf eine andere übergeleitet. Nach Ablauf der Zeit Δt wird dann die neue Regelcharakteristik verwendet.

An dieser Stelle erscheint es notwendig darauf hinzuweisen, dass die vorstehend angesprochenen Regler in heute üblichen Fahrzeugen keine aus Bauteilen aufgebaute analoge Regler sind, sondern vielmehr digitale Regler, die in Form von Softwarealgorithmen auf einer Recheneinheit des Fahrzeugs implementiert sind. Diese digitalen Regler erzeugen zeitsequentiell aus digitalen Eingangswerten digitale Ausgangswerte, wobei das Gesamtverhalten des Algorithmus einen Regler mit entsprechender Regelcharakteristik abbildet.

Um dem Fahrer eine Möglichkeit zur Beeinflussung der Spurführung zu geben, ist im Beispiel nach der Figur ein Eingabemittel 20 vorgesehen. Wie durch den fünften Wirkpfeil 21 angedeutet, kann der Fahrzeugführer 2, durch entsprechende Bedienung des Eingabemittels 20, Einfluss auf die Auswahl des Reglers nehmen. Dies geschieht dadurch, dass die Fahrereingabe tendenzbildend wirkt, zum Beispiel hin zu einer engeren Führung des Fahrzeugs an der Fahrzeug-Soll-Lage oder hin zu einer loseren Führung des Fahrzeugs an der Fahrzeug-Soll-Lage.

Zur Information des Fahrers ist es im gewählten Beispiel vorgesehen, gesteuert durch das Regler-Auswahlsystem, mittels einer Informationseinrichtung 22 eine Information auszugeben, die entsprechend dem symbolischen sechsten Wirkpfeil 23, den Fahrzeugführer 2 über die Art der gerade verwendeten Führung an der Fahrzeug-Soll-Lage informiert. Hierzu ist beispielsweise auf einer Anzeige (in der Figur nicht dargestellt) die Darstellung eines Indikators an einem von grün über gelb nach rot übergehenden Farbbalken denkbar, wobei rot für eine enge Führung des Fahrzeugs an der Fahrzeug-Soll-Lage und grün für eine lose Führung des Fahrzeugs an der Fahrzeug-Soll-Lage steht. Selbstverständlich kann die Information auch akustischer, sprachlicher oder alphanumerischer Natur sein oder so ergänzt werden.

Um die Funktionsweise des vorstehend beschriebenen Regler-Systems 14 und des Regler-Auswahlsystems 16 näher zu erläutern, ist im nachfolgend beschriebenen Beispiel vereinfachend angenommen, dass das Regler-System 14 nur zwei Regelcharakteristiken $R_1$ und $R_2$ (nachfolgend auch als Regler $R_1$ und Regler $R_2$ bezeichnet) beinhaltet, die je nach Fahrsituation zum Einsatz kommen. Dazu können beispielsweise zwei Regelalgorithmen (Regler) der Art

$$u(t) = Z(t) \cdot e(t)$$

auf einer Recheneinheit laufen, die je nach Auswahl für Regler $R_1$ oder Regler $R_2$ oder für beide simultan ein Stellsignal für den Lenkaktuator 15 berechnen. Die Größe $e(t)$ ist die zeitabhängige Regelabweichung, $Z(t)$ der fahrzustands- und fahrstreifenabhängige Reglerterm. Daraus wird der zeitabhängige Reglerausgang $u(t)$, der das Stellsignal für den Aktuator darstellt, berechnet.

Alternativ ist, wie oben bereits angedeutet, aber auch ein einziger Regler (zum Beispiel Zustandsregler) mit mindestens zwei unterschiedlichen Rückführmatrizen $K_1$ und $K_2$ der Art

$$u(t) = - K_i \cdot \vec{x}(t)$$

möglich. Der Vektor $\vec{x}(t)$ beinhaltet dabei den oder die für die Regelung relevanten Zustand/ Zustände. $K_i$ ist die Rückführung und beschreibt, wie das Stellsignal $u(t)$ berechnet wird.

Ein Regler bzw. eine Rückführung oder Parametrierung (Regler $R_1$) ist so ausgelegt, dass die Genauigkeit der Spurhaltung möglichst groß ist. Der zweite Regler bzw. eine weitere Rückführung oder Parametrierung (Regler $R_2$) ist auf geringe Stellaktivität durch den Lenkaktuator 15 und damit einen hohen Lenkkomfort ausgelegt.

Wenn im Nachfolgenden von den zwei Reglern R1 und R2 die Rede ist und nicht explizit darauf hingewiesen wird, dass diese auch unter Verwendung zweier unterschiedlicher Parametersätze mittels eines Reglers gebildet sein können, soll dieser Umstand als gegeben angenommen werden.

Je nach Fahrsituation wird durch das Regler-Auswahlsystem 16 zwischen den beiden Reglern $R_1$ und $R_2$ umgeschaltet oder übergeblendet. Regler $R_1$ ist in Situationen aktiv, in denen die Genauigkeit der Spurführung vorrangig ist, wobei eine enge Führung des Fahrzeugs an der Fahrzeug-Soll-Lage erfolgt, um den Fahrzeugführer 2 in schwierigeren Situationen optimal zu unterstützen. Dies ist zum Beispiel bei Vorliegen folgender Kriterien der Fall

- in kurvigen Straßenabschnitten,

- auf schmalen Fahrstreifen,

- in Fahrsituationen mit Störeinflüssen durch Straßenneigung, Seitenwind oder Spurrinnen, in denen die Ist-Position innerhalb des Fahrstreifens von der Soll-Position abweicht.

Auf diese Weise wird eine gute Spurgenauigkeit in oben genannten Situationen erreicht. Es ist an dieser Stelle darauf hinzuweisen, dass die vorstehend aufgeführten Kriterien selbstverständlich nur eine Auswahl aus der Gesamtzahl der möglichen Kriterien sind, eine ausführlichere Auflistung der Kriterien, bei deren Auftreten eine enge Führung an der Fahrzeug-Soll-Lage erfolgt, findet sich vorstehend in der Beschreibungseinleitung.

Regler $R_2$ ist in Situationen aktiv, in denen ein hoher Lenkkomfort für den Fahrzeugführer 2 gegeben sein soll und eine hohe Spurgenauigkeit nur sekundär ist, was einer losen und damit komfortableren Führung des Fahrzeugs an der Fahrzeug-Soll-Lage entspricht. Dies ist zum Beispiel bei folgenden Kriterien der Fall:

- Geradeausfahrt

- breiter Fahrstreifen.

Auf diese Weise wird ein hoher Lenkkomfort in den vorstehend genannten Situationen erreicht. Auch hier ist anzumerken, dass die vorstehend beispielhaft aufgeführten Kriterien selbstverständlich nur eine Auswahl aus der Gesamtzahl der möglichen Kriterien sind, eine ausführlichere Auflistung der Kriterien, bei deren Auftreten eine lose Führung an der Fahrzeug-Soll-Lage erfolgt, findet sich vorstehend in der Beschreibungseinleitung.

Das Regler-Auswahlsystem 16 verwendet hierzu einen Auswahlalgorithmus, der in Abhängigkeit der oben genannten Kriterien entscheidet, welcher Regler verwendet wird. Der Auswahlalgorithmus kann dabei instantan zwischen den Reglern umschalten oder auch nahtlos von einem Regler zum anderen Regler überblenden. Das Umschalten bzw. Überblenden erfolgt jeweils bei einer Änderung der oben genannten Kriterien. Hierzu bedient sich der Auswahlalgorithmus folgender Informationen:

- Fahrstreifenkrümmung, erfasst über das Spurerfassungssystem oder einer digitalen Karte.

- Fahrstreifenbreite, erfasst über ein Spurerfassungssystem oder einer digitalen Karte.

- Abweichung der Ist-Position von der Soll-Position innerhalb des Fahrstreifens, erfasst über das Spurerfassungssystem. Eine Abweichung ergibt sich zum Beispiel auf Grund von Störeinflüssen durch Seitenwind, Spurrinnen etc.

- Straßenneigung, erfasst über Fahrzeugsensorik.

- Eingabe durch den Fahrer.

Bevorzugt erfolgt die Überblendung zwischen Regler $R_2$ in Richtung Regler $R_1$ instantan, um auf schwierige Fahrzustände oder Fahrstreifengegebenheiten möglichst schnell reagieren zu können.

Ein Überblenden von Regler $R_1$ auf Regler $R_2$ erfolgt in der Regel mit einer geringen Überblendrate, um den Lenkkomfort durch einen Wechsel der Regler für den Fahrzeugführer 2 nicht unnötig negativ zu beeinflussen.

Ferner ist auch möglich, dass in bestimmten Zuständen, beispielsweise einer langgezogenen, leichten Kurve, dauerhaft zwischen zwei Reglern interpoliert wird. Dies kann erreicht werden, indem die Reglerausgänge u(t) nach einem vorgegebenen Verfahren miteinander verrechnet werden oder auch durch Interpolation der beiden Rückführmatrizen $K_1$ und $K_2$.

Um das Verhalten des Querführungssystems 1, also das Verfahren nach dem es arbeitet, in Abhängigkeit von beispielhaften Fahrsituation zu verdeutlichen, ist nachfolgend in einem Beispiel angenommen, dass das Fahrzeug von einem Fahrbahnabschnitt mit geradem, breitem Fahrstreifen auf einen Fahrbahnabschnitt mit starken Kurven wechselt, wobei sich die Fahrstreifenbreite nicht ändert und keine weiteren der oben genannten Kriterien erfüllt sind.

Der vom Regler-Auswahlsystem 16 verwendete Auswahlalgorithmus gewinnt (beim Befahren des geraden Fahrbahnabschnittes mit breitem Fahrstreifen) durch zyklisches Abfragen der entsprechenden Informationen aus dem Spurerfassungssystem 10 die Kriterien "Fahrbahn gerade", "Fahrspur breit" und "keine Abweichung der Ist-Position von der Soll-Position innerhalb des Fahrstreifens". Durch zyklisches Abfragen eines Neigungssensors (nicht explizit dargestellt) und vergleichen des erfassten Wertes mit einem Grenzwert ermittelt der Auswahlalgorithmus das Kriterium "Neigung im Normalbereich" und durch zyklisches Abfragen des vom Fahrzeugführer 2 bedienbaren Eingabemittels 20 das Kriterium "keine Fahrereingabe". Nachdem alle Kriterien, die eine lose Führung des Fahrzeugs an der Fahrzeug-Soll-Lage bedingen erfüllt sind und alle Kriterien, die eine enge Führung des Fahrzeugs an der Fahrzeug-Soll-Lage bedingen, nicht erfüllt sind, ist bei diesem Fahrbahnabschnitt Regler $R_2$ des Reger-Systems 14 in Betrieb. Dies würde sich beispielsweise dann ändern, wenn durch eine Fahrereingabe über das Eingabemittel 20 eine enge Führung des Fahrzeugs an der Fahrzeug-Soll-Lage angefordert würde.

Wechselt das Fahrzeug unter Verwendung des Reglers $R_2$ in den Fahrbahnabschnitt mit starken Kurven, stellt der Auswahlalgorithmus durch die vorstehend beschriebenen zyklischen Abfragen fest, dass zwei Kriterien, die jeweils eine gegenläufige Reglerauswahl bedingen, erfüllt sind, während alle übrigen Kriterien nicht erfüllt sind. Hier ist in dem Auswahlalgorithmus eine Gewichtung vorgesehen, die dem Kriterium "starke Kurven" einen höheren Stellenwert einräumt, als dem Kriterium "Fahrstreifen breit". So dass der Auswahlalgorithmus den Regler $R_1$ als den zukünftig zu verwendenden Regler definiert. Wie oben bereits ausgeführt, erfolgt ein Übergang von Regler $R_2$ auf Regler $R_1$ bevorzugt unmittelbar durch Umschalten der Regler im Regler-System 14, oder durch den unmittelbaren Wechsel des verwendeten Parametersatzes, wenn ein Regler mit unterschiedlichen Parametersätzen verwendet ist.

Nimmt man im Rahmen des vereinfachten Beispiels weiter an, dass, nach dem Durchfahren des Fahrbahnabschnittes mit starken Kurven, ein erneuter Wechsel auf einen Fahrbahnabschnitt mit gerader Fahrbahn und breitem Fahrstreifen erfolgt, wird dieser Wechsel durch die zyklischen Abfragen des Auswahlalgorithmus registriert und ebenso, dass die eine lose Führung des Fahrzeugs an der Fahrzeug-Soll-Lage bedingenden Kriterien erfüllt sind, die Kriterien die eine enge Führung des Fahrzeugs an der Fahrzeug-Soll-Lage bedingenden, hingegen nicht. In diesem Fall vollzieht der Auswahlalgorithmus einen Wechsel von Regler $R_1$ auf Regler $R_2$. Dieser Wechsel erfolgt aus Gründen eines höheren Lenkkomforts nicht unmittelbar, der Auswahlalgorithmus bedient sich vielmehr eines Übergangsalgorithmus der in einem Funktionsblock vorgehalten ist, der in der Figur die Bezeichnung Stellsignal-Modifikationseinheit 19 trägt und der für ein vorgegebenes Zeitintervall Δt aus der zeitabhängigen Regelabweichung e(t) ein modifiziertes Stellsignal $u(t)_{mod}$ erzeugt. Dies kann beispielsweise dadurch geschehen, dass innerhalb des Zeitintervalls Δt in zeitlicher Folge unterschiedliche Regelterme Z(t) verwendet werden, wobei die Regelterme durch die Stellsignal-Modifikationseinheit 19 so modifiziert sind, dass das Stellsignal u(t) ausgehend von dem Stellsignal das der Regler $R_1$ erzeugt, schrittweise zu dem Stellsignal hingeführt wird, das der Regler $R_2$ erzeugt.

Alternativ ließe sich natürlich auch unter Verwendung des Reglers $R_1$ aus dessen Stellsignal u(t) unter Zuhilfenahme einer in der Stellsignal-Modifikationseinheit 19 vorgehaltenen Übergangsfunktion ein modifiziertes Stellsignal u(t)$_{mod}$ erzeugen, wobei auch dieses Stellsignal, ausgehend von dem Stellsignal das der Regler $R_1$ erzeugt, zu dem Stellsignal hingeführt wird, das der Regler $R_2$ erzeugt.

**Bezugszeichenliste**

1 Querführungssystem
2 Fahrzeugführer
3 Lenkrad
4 Servo-Einrichtung
5 erster Wirkpfeil
6 zweiter Wirkpfeil
7 Lenkeinrichtung
8 Rückwirkpfeil
9 dritter Wirkpfeil
10 Spurerfassungssystem
11 Kameraeinrichtung
12 Fahrspurerfassungssystem
13 Fahrzeuglageerfassungssystem
14 Regler-System
15 Lenkaktuator
16 Regler-Auswahlsystem
17 erste Gruppe (von Hilfseinrichtungen 17.1 bis 17.N)
18 zweite Gruppe (von Hilfseinrichtungen 18.1 bis 18.N)
19 Stellsignal-Modifikationseinheit
20 Eingabemittel
21 vierter Wirkpfeil
22 Informationseinrichtung
23 fünfter Wirkpfeil

**Patentansprüche**

1. Querführungssystem zur adaptiven automatisierten Querführung eines Fahrzeugs, mit einem

- Fahrspurerfassungssystem (12), das eine Fahrspur erfasst,
- Fahrzeuglageerfassungssystem (13), das die Fahrzeug-Ist-Lage relativ zu der Fahrspur erfasst,
- Regler-System (14), das aus der Fahrzeug-Ist-Lage relativ zu der Fahrspur und einer Fahrzeug-Soll-Lage relativ zu der Fahrspur eine Regelabweichung und daraus ein Stellsignal ermittelt,
- Lenkaktuator (15), den das Regler-System (14) so mit dem Stellsignal beaufschlagt, dass die Fahrzeug-Ist-Lage auf die Fahrzeug-Soll-Lage eingeregelt wird,

wobei

- das Regler-System (14) wenigstens zwei Regler oder wenigstens einen Regler mit wenigstens zwei Parametersätzen enthält, wobei die jeweils durch die Regler oder jeweils durch die Parametersätze erzeugten Regelcharakteristiken unterschiedlich sind,
- ein Regler-Auswahlsystem (16) vorgesehen ist, das mit Hilfe von Hilfseinrichtungen (17.1 -17.N und 18.1 - 18.N) wenigstens eine die Fahrsituation beeinflussende Größe erfasst und, je nach Wert der wenigstens einen Größe, einen der Regler oder einen der Parametersätze zur Verwendung im Regler-System (14) auswählt und
- das Regler-System (14) unter Verwendung des ausgewählten Reglers oder des ausgewählten Parametersatzes ein Stellsignal an den Lenkaktuator (15) ausgibt,

**dadurch gekennzeichnet,**
**dass** die Regelcharakteristik erzeugt durch wenigstens einen der wenigstens zwei Regler oder wenigstens einen der wenigstens zwei Parametersätze auf eine enge Führung des Fahrzeugs an der Fahrzeug-Soll-Lage ausgelegt ist und dass die Regelcharakteristik erzeugt durch wenigstens einen weiteren der wenigstens zwei Regler oder wenigstens einen weiteren der wenigstens zwei Parametersätze auf eine lose Führung des Fahrzeugs an der Fahrzeug-Soll-Lage ausgelegt ist.

2. Querführungssystem nach Anspruch 1, **dadurch gekennzeichnet, dass**, bei Übergang von einem aktuell verwendeten Regler auf einen neu zu verwendenden Regler oder einem aktuell verwendeten Parametersatz auf einen neu zu verwendenden Parametersatz, das Regler-Auswahlsystem (16), abhängig von dem jeweiligen Übergang, eine Übergangscharakteristik ermittelt und eine Stellsignal-Modifikationseinheit (19) beaufschlagt, derart, dass diese temporär ein modifiziertes Stellsignal erzeugt und damit den Lenkaktuator (15) beaufschlagt.

3. Querführungssystem nach einem der vorhergehenden Ansprüche, **dadurch gekennzeichnet, dass** das Regler-Auswahlsystem (16) den Wert wenigstens einer der nachfolgenden Größen zur Bestimmung des zu verwendenden Reglers mittels Hilfseinrichtungen (17.1 -17.N und 18.1 - 18.N) erfasst:

- die Fahrzeuggeschwindigkeit,
- die Fahrzeugmasse,
- die Querbeschleunigung des Fahrzeugs,
- den Lenkwinkel,
- den Gierwinkel,
- die Fahrstreifenkrümmung,
- die Fahrbahnneigung,
- die Rauheit des Straßenbelags,
- die Fahrstreifenbreite,
- die ist-Position des Fahrzeugs im Fahrstreifen,
- die Außentemperatur,
- die Windverhältnisse,
- die Straßennässe,
- die Sichtbedingungen
- die rückwärtige Verkehrssituation,
- die seitwärtige Verkehrssituation,
- die aktuelle und vorausliegende Verkehrssituation,
- der aktuelle und vorausliegende Straßenverlauf.

4. Querführungssystem nach einem der vorhergehenden Ansprüche, **dadurch gekennzeichnet, dass** das Regler-Auswahlsystem (16) die Reglerauswahl nach wenigstens einer der folgenden Grundbeziehungen vornimmt:

    - hohe Fahrzeuggeschwindigkeit, enge Führung des Fahrzeugs an der Fahrzeug-Soll-Lage,
    - geringe Fahrzeuggeschwindigkeit, lose Führung des Fahrzeugs an der Fahrzeug-Soll-Lage,
    - hohe Fahrzeugmasse, enge Führung des Fahrzeugs an der Fahrzeug-Soll-Lage,
    - geringe Fahrzeugmasse, lose Führung des Fahrzeugs an der Fahrzeug-Soll-Lage,
    - hohe Querbeschleunigung des Fahrzeugs, enge Führung des Fahrzeugs an der Fahrzeug-Soll-Lage,
    - geringe Querbeschleunigung des Fahrzeugs, lose Führung des Fahrzeugs an der Fahrzeug-Soll-Lage,
    - großer Lenkwinkel, enge Führung des Fahrzeugs an der Fahrzeug-Soll-Lage,
    - kleiner Lenkwinkel, lose Führung des Fahrzeugs an der Fahrzeug-Soll-Lage,
    - großer Gierwinkel, enge Führung des Fahrzeugs an der Fahrzeug-Soll-Lage,
    - kleiner Gierwinkel, lose Führung des Fahrzeugs an der Fahrzeug-Soll-Lage,
    - große Fahrstreifenkrümmung, enge Führung des Fahrzeugs an der Fahrzeug-Soll-Lage,
    - kleine Fahrstreifenkrümmung, lose Führung des Fahrzeugs an der Fahrzeug-Soll-Lage,
    - große Fahrbahnneigung, enge Führung des Fahrzeugs an der Fahrzeug-Soll-Lage,
    - kleine Fahrbahnneigung, lose Führung des Fahrzeugs an der Fahrzeug-Soll-Lage,
    - geringe Rauheit des Straßenbelags, enge Führung des Fahrzeugs an der Fahrzeug-Soll-Lage,
    - hohe Rauheit des Straßenbelags, lose Führung des Fahrzeugs an der Fahrzeug-Soll-Lage,
    - kleine Fahrstreifenbreite, enge Führung des Fahrzeugs an der Fahrzeug-Soll-Lage,
    - große Fahrstreifenbreite, lose Führung des Fahrzeugs an der Fahrzeug-Soll-Lage,
    - große Ablage der ist-Position des Fahrzeugs von seiner Soll-Position im Fahrstreifen, enge Führung des Fahrzeugs an der Fahrzeug-Soll-Lage,
    - geringe Ablage der ist-Position des Fahrzeugs von seiner Soll-Position im Fahrstreifen, lose Führung des Fahrzeugs an der Fahrzeug-Soll-Lage,
    - Außentemperatur unter dem Gefrierpunkt, enge Führung des Fahrzeugs an der Fahrzeug-Soll-Lage,
    - Außentemperatur über dem Gefrierpunkt, lose Führung des Fahrzeugs an der Fahrzeug-Soll-Lage,
    - Überholendes Fahrzeug von hinten oder im Seitenbereich oder auf Fahrzeughöhe, enge Führung des Fahrzeugs an der Fahrzeug-Soll-Lage,
    - Baustelle vorausliegend, enge Führung des Fahrzeugs an der Fahrzeug-Soll-Lage,
    - kurvenreicher Straßenverlauf vorausliegend, enge Führung des Fahrzeugs an der Fahrzeug-Soll-Lage,
    - gerader Straßenverlauf vorausliegend, lose Führung des Fahrzeugs an der Fahrzeug-Soll-Lage,
    - nasse Fahrbahn, enge Führung des Fahrzeugs an der Fahrzeug-Soll-Lage,
    - schlechte Sicht, enge Führung des Fahrzeugs an der Fahrzeug-Soll-Lage
    - starker Wind, enge Führung des Fahrzeugs an der Fahrzeug-Soll-Lage
    - auftauchendes Objekt am Straßenrand, enge Führung des Fahrzeugs an der Fahrzeug-Soll-Lage.

5. Querführungssystem nach einem der vorhergehenden Ansprüche, **dadurch gekennzeichnet, dass**, bei Erfassung der Werte mehrerer Größen für die Bestimmung des Reglers oder des Parametersatzes, die Werte gewichtet in die Reglerauswahl eingehen, derart, dass das Regler-Auswahlsystem (16) die erfassten Werte, abhängig von der Gewichtung der Größen, mit der Gewichtung zu gewichteten Werten verrechnet, aus den gewichteten Werten ein Gesamtwert ermittelt und daraus den zu verwendenden Regler bestimmt.

6. Querführungssystem nach einem der vorhergehenden Ansprüche, **dadurch gekennzeichnet, dass**, bei Erfassung der Werte mehrerer Größen, das Regler-Auswahlsystem (16) für die Bestimmung des Reglers oder des Parametersatzes ein künstliches neuronales Netz verwendet.

7. Querführungssystem nach einem der vorhergehenden Ansprüche, **dadurch gekennzeichnet, dass**, bei Übergang von einem Regler oder Parametersatz, der eine lose Führung des Fahrzeugs an der Fahrzeug-Soll-Lage bewirkt, auf einen Regler oder Parametersatz der eine enge Führung des Fahrzeugs an der Fahrzeug-Soll-Lage bewirkt, durch das Regler-Auswahlsystem (16) ein direktes Umschalten der Regler oder Parametersätze erfolgt.

8. Querführungssystem nach einem der vorhergehenden Ansprüche, **dadurch gekennzeichnet, dass**, bei Übergang von einem Regler oder Parametersatz, der eine enge Führung des Fahrzeugs an der Fahrzeug-Soll-Lage bewirkt, auf einen Regler oder Parametersatz der eine lose Führung des Fahrzeugs an der Fahrzeug-Soll-Lage bewirkt, das Regler-System (16) für eine vorgebbare Zeit Δt ein modifiziertes Stellsignal auf den Lenkaktuator (15) schaltet und dass nach Ablauf der Zeit Δt das Regler-System (14) den Regler oder Parametersatz, der eine lose Führung des Fahrzeugs an der Fahrzeug-Soll-Lage bewirkt, zur Bildung des Stellsignals verwendet.

9. Querführungssystem nach Anspruch 8, **dadurch gekennzeichnet, dass** die Modifikation des Stellsignals so erfolgt, dass innerhalb der Zeit Δt ein allmählicher Übergang von der Regelcharakteristik des Reglers oder Parametersatzes, der eine enge Führung des Fahrzeugs an der Fahrzeug-Soll-Lage bewirkt, auf die Regelcharakteristik des Reglers oder Parametersatzes, der eine lose Führung des Fahrzeugs an der Fahrzeug-Soll-Lage bewirkt, nachgebildet wird.

10. Querführungssystem nach Anspruch 8 oder 9, **dadurch gekennzeichnet, dass** die Zeit Δt abhängig vom Wert wenigstens einer erfassten Größe ermittelt wird.

11. Querführungssystem nach einem der Ansprüche 2 bis 10, **dadurch gekennzeichnet, dass** im Regler-Auswahlsystem (16) für eine oder mehrere Größen Wertebereiche vordefiniert sind und dass das Regler-Auswahlsystem (16), dann, wenn der oder die Werte der einen oder mehreren erfassten Größen im vordefinierten Wertebereich liegen, zwei Regler oder zwei Parametersätze auswählt und die Stellsignal-Modifikationseinheit (19) ein modifiziertes Stellsignal durch Interpolation zwischen den Stellsignalen der beiden Regler bildet und auf den Lenkaktuator (15) aufschaltet.

12. Querführungssystem nach einem der vorhergehenden Ansprüche, **dadurch gekennzeichnet, dass** ein durch den Fahrzeugführer (2) bedienbares, auf das Regler-Auswahlsystem (16) wirkendes Eingabemittel (20) vorgesehen ist, mittels dem die Auswahl des Reglers oder Parametersatzes beeinflussbar ist.

13. Querführungssystem nach Anspruch 12, **dadurch gekennzeichnet, dass** das durch den Fahrzeugführer (2) bedienbare Eingabemittel tendenzbildend wirkt.

14. Fahrzeug, insbesondere Nutzfahrzeug, das ein Querführungssystem gemäß einem der vorhergehenden Ansprüche umfasst.

**Claims**

1. Transverse guidance system for adaptive automated transverse guidance of a vehicle, comprising

   - a lane detection system (12), which detects a lane,
   - a vehicle position detection system (13), which detects the current vehicle position relative to the lane,
   - a controller system (14), which determines a control deviation and, from the latter, an actuating signal from the current vehicle position relative to the lane and a target vehicle position relative to the lane,
   - a steering actuator (15), to which the controller system (14) applies the actuating signal such that the current vehicle position is controlled to the target vehicle position,
   - the controller system (14) containing at least two controllers or at least one controller with at least two parameter sets, the control characteristics produced respectively by the controllers or respectively by the parameter sets being different,
   - a controller selection system (16) being provided which, with the aid of auxiliary devices (17.1-17.N and 18.1-18.N), detects at least one variable influencing the driving situation and, depending on the value of the at least one variable, selects one of the controllers or one of the parameter sets for use in the controller system (14), and
   - the controller system (14) outputting an actuating signal to the steering actuator (15) by using the selected controller or the selected parameter set,

   **characterized in that**
   the control characteristic produced by at least one of the at least two controllers or at least one of the at least two parameter sets is designed for close guidance of the vehicle to the target vehicle position, and **in that** the control characteristic produced by at least one further of the at least two controllers or at least one further of the at least two parameter sets is designed for loose guidance of the vehicle to the target vehicle position.

2. Transverse guidance system according to Claim 1, **characterized in that** at a transition from a currently used controller to a controller that is newly to be used or from a currently used parameter set to a parameter set that is newly to be used, the controller selection system (16) determines a transition characteristic depending on the respective transition and applies it to an actuating signal modification unit (19) in such a way that the latter temporarily generates a modified actuating signal and applies the same to the steering actuator (15).

3. Transverse guidance system according to one of the preceding claims, **characterized in that** with the aid of auxiliary devices (17.1-17.N and 18.1-18.N), the controller selection system (16) detects the value of at least one of the following variables in order to determine the controller to be used:

   - the vehicle speed,
   - the vehicle mass,
   - the transverse acceleration of the vehicle,
   - the steering angle,
   - the yaw angle,
   - the lane curvature,
   - the roadway inclination,
   - the roughness of the road surface,
   - the lane width,
   - the current position of the vehicle in the lane,
   - the outside temperature,
   - the wind conditions,
   - the road conditions,
   - the visibility conditions,
   - the traffic situation at the rear,
   - the traffic situation at the side,
   - the traffic situation at present and ahead,
   - the course of the road at present and ahead.

4. Transverse guidance system according to one of the preceding claims, **characterized in that** the controller selection system (16) performs the controller selection in accordance with at least one of the following basic relationships:

   - high vehicle speed, close guidance of the vehicle to the target vehicle position,
   - low vehicle speed, loose guidance of the vehicle to the target vehicle position,
   - high vehicle mass, close guidance of the vehicle to the target vehicle position,
   - low vehicle mass, loose guidance of the vehicle to the target vehicle position,
   - high transverse acceleration of the vehicle, close guidance of the vehicle to the target vehicle position,
   - low transverse acceleration of the vehicle, loose guidance of the vehicle to the target vehicle position,
   - large steering angle, close guidance of the vehicle to the target vehicle position,
   - small steering angle, loose guidance of the vehicle to the target vehicle position,
   - high yaw angle, close guidance of the vehicle to the target vehicle position,
   - low yaw angle, loose guidance of the vehicle to the target vehicle position,
   - high lane curvature, close guidance of the vehicle to the target vehicle position,
   - low lane curvature, loose guidance of the vehicle to the target vehicle position,
   - high roadway inclination, close guidance of the vehicle to the target vehicle position,
   - low roadway inclination, loose guidance of the vehicle to the target vehicle position,
   - low roughness of the road surface, close guidance of the vehicle to the target vehicle position,
   - high roughness of the road surface, loose guidance of the vehicle to the target vehicle position,
   - small lane width, close guidance of the vehicle to the target vehicle position,
   - large lane width, loose guidance of the vehicle to the target vehicle position,
   - large offset of the current position of the vehicle from its target position in the lane, close guidance of the vehicle to the target vehicle position,
   - small offset of the current position of the vehicle from its target position in the lane, loose guidance of the vehicle to the target vehicle position,
   - outside temperature below freezing point, close guidance of the vehicle to the target vehicle position,
   - outside temperature above freezing point, loose guidance of the vehicle to the target vehicle position,
   - vehicle overtaking from behind or in the side area or at vehicle height, close guidance of the vehicle to the target vehicle position,
   - construction site ahead, close guidance of the vehicle to the target vehicle position,
   - winding road ahead, close guidance of the vehicle to the target vehicle position,
   - straight road ahead, loose guidance of the vehicle to the target vehicle position,
   - wet lane, close guidance of the vehicle to the target vehicle position,
   - poor visibility, close guidance of the vehicle to the target vehicle position,

- high wind, close guidance of the vehicle to the target vehicle position,
- emerging object at the roadside, close guidance of the vehicle to the target vehicle position.

5. Transverse guidance system according to one of the preceding claims, **characterized in that** when detecting the values of several variables for the determination of the controller or of the parameter set, the values are weighted in the controller selection in such a way that, depending on the weighting of the variables, the controller selection system (16) processes the detected values with the weighting to form weighted values, determines an overall value from the weighted values and, from the overall value, determines the controller to be used.

6. Transverse guidance system according to one of the preceding claims, **characterized in that** when detecting the values of several variables, the controller selection system (16) uses an artificial neural network for the determination of the controller or the parameter set.

7. Transverse guidance system according to one of the preceding claims, **characterized in that** at a transition from a controller or parameter set which effects loose guidance of the vehicle to the target vehicle position to a controller or parameter set which effects close guidance of the vehicle to the target vehicle position, a direct changeover of the controllers or the parameter sets is carried out by the controller selection system (16).

8. Transverse guidance system according to one of the preceding claims, **characterized in that** at a transition from a controller or parameter set which effects close guidance of the vehicle to the target vehicle position to a controller or parameter set which effects loose guidance of the vehicle to the target vehicle position, the controller system (16) applies a modified actuating signal to the steering actuator (15) for a predefinable time $\Delta t$, and **in that** after the expiry of the time $\Delta t$, the controller system (14) uses the controller or parameter set which effects loose guidance of the vehicle to the target vehicle position to form the actuating signal.

9. Transverse guidance system according to Claim 8, **characterized in that** the modification of the actuating signal is carried out such that, within the time $\Delta t$, a gradual transition from the control characteristic of the controller or parameter set which effects close guidance of the vehicle to the target vehicle position to the control characteristic of the control or parameter set which effects loose guidance of the vehicle to the target vehicle position is simulated.

10. Transverse guidance system according to Claim 8 or 9, **characterized in that** the time $\Delta t$ is determined as a function of the value of at least one detected variable.

11. Transverse guidance system according to one of Claims 2 to 10, **characterized in that** value ranges are predefined in the controller selection system (16) for one or more variables, and **in that** when the value or the values of the one or more detected variables lie/s in the predefined value range, the controller selection system (16) selects two controllers or two parameter sets and the actuating signal modification unit (19) forms a modified actuating signal by interpolation between the actuating signals from the two controllers and applies the same to the steering actuator (15).

12. Transverse guidance system according to one of the preceding claims, **characterized in that** an input means (20) that can be operated by the vehicle driver (2) and acts on the controller selection system (16) is provided, by means of which the selection of the controller or parameter set can be influenced.

13. Transverse guidance system according to Claim 12, **characterized in that** the input means that can be operated by the vehicle driver (2) acts in a trend-forming manner.

14. Vehicle, in particular utility vehicle, which comprises a transverse guidance system according to one of the preceding claims.

**Revendications**

1. Système de guidage transversal pour le guidage transversal automatisé adaptatif d'un véhicule, avec un

- système de détection de la voie de circulation (12), qui détecte une voie de circulation,
- système de détection de la position du véhicule (13), qui détecte la position réelle du véhicule par rapport à la voie de circulation,
- système de régulateur (14), qui détermine à partir de la position réelle du véhicule par rapport à la voie de circulation et d'une position théorique du véhicule par rapport à la voie de circulation un écart de régulation et à partir de celui-ci un signal de réglage,
- actionneur de direction (15), auquel le système de régulateur (14) envoie le signal de réglage, de telle manière que la position réelle du véhicule soit régulée à la position théorique du véhicule,

dans lequel

- le système de régulateur (14) contient au moins deux régulateurs ou au moins un régulateur avec au moins deux ensembles de paramètres, dans lequel les caractéristiques de régulation produites respectivement par les régulateurs ou respectivement par les ensembles de paramètres sont différentes,
- il est prévu un système de sélection de régulateur (16), qui détecte à l'aide de dispositifs auxiliaires (17.1 - 17.N et 18.1 - 18.N) au moins une grandeur influençant la situation de circulation et, selon la valeur de ladite au moins une grandeur, sélectionne un des régulateurs ou un des ensembles de paramètres pour son utilisation dans le système de régulateur (14), et
- le système de régulateur (14) envoie un signal de réglage à l'actionneur de direction (15) en utilisant le régulateur sélectionné ou l'ensemble de paramètres sélectionné,

**caractérisé en ce que** la caractéristique de régulation produite par au moins un desdits au moins deux régulateurs ou au moins un desdits au moins deux ensembles de paramètres est conçue pour un guidage strict du véhicule à la position théorique du véhicule et **en ce que** la caractéristique de régulation produite par au moins un autre desdits au moins deux régulateurs ou au moins un autre desdits au moins deux ensembles de paramètres est conçue pour un guidage libre du véhicule à la position théorique du véhicule.

2. Système de guidage transversal selon la revendication 1, **caractérisé en ce que**, lors du transfert d'un régulateur actuellement utilisé à un nouveau régulateur à utiliser ou d'un ensemble de paramètres actuellement utilisé à un nouvel ensemble de paramètres à utiliser, le système de sélection de régulateur (16) détermine, en fonction du transfert respectif, une caractéristique de transfert et sollicite une unité de modification du signal de réglage (19), de telle manière que celle-ci produise temporairement un signal de réglage modifié et envoie celui-ci à l'actionneur de direction (15).

3. Système de guidage transversal selon l'une quelconque des revendications précédentes, **caractérisé en ce que** le système de sélection de régulateur (16) détecte au moyen de dispositifs auxiliaires (17.1 - 17.N et 18.1 - 18.N) la valeur d'au moins une des grandeurs suivantes pour la détermination du régulateur à utiliser:

- la vitesse du véhicule,
- la masse du véhicule,
- l'accélération transversale du véhicule,
- l'angle de braquage,
- l'angle de lacet,
- la courbure de la bande de circulation,
- l'inclinaison de la chaussée,
- la rugosité du revêtement routier,
- la largeur de la bande de circulation,
- la position réelle du véhicule dans la bande de circulation,
- la température extérieure,
- les conditions de vent,
- l'humidité de la route,
- les conditions de visibilité,
- la situation du trafic vers l'arrière,
- la situation du trafic vers le côté,
- la situation du trafic actuelle et future,
- le tracé de la route actuel et futur.

4. Système de guidage transversal selon l'une quelconque des revendications précédentes, **caractérisé en ce que** le système de sélection de régulateur (16) opère la sélection du régulateur selon au moins une des relations de base suivantes:

- vitesse élevée du véhicule, guidage strict du véhicule à la position théorique du véhicule,
- faible vitesse du véhicule, guidage libre du véhicule à la position théorique du véhicule,
- masse élevée du véhicule, guidage strict du véhicule à la position théorique du véhicule,
- faible masse du véhicule, guidage libre du véhicule à la position théorique du véhicule,
- accélération transversale élevée du véhicule, guidage strict du véhicule à la position théorique du véhicule,
- faible accélération transversale du véhicule, guidage libre du véhicule à la position théorique du véhicule,
- grand angle de braquage, guidage strict du véhicule à la position théorique du véhicule,
- petit angle de braquage, guidage libre du véhicule à la position théorique du véhicule,
- grand angle de lacet, guidage strict du véhicule à la position théorique du véhicule,
- petit angle de lacet, guidage libre du véhicule à la position théorique du véhicule,
- forte courbure de la bande de circulation, guidage strict du véhicule à la position théorique du véhicule,
- faible courbure de la bande de circulation, guidage libre du véhicule à la position théorique du véhicule,
- forte inclinaison de la chaussée, guidage strict du véhicule à la position théorique du véhicule,
- faible inclinaison de la chaussée, guidage libre du véhicule à la position théorique du véhicule,
- faible rugosité du revêtement routier, guidage strict du véhicule à la position théorique du véhicule,

- rugosité élevée du revêtement routier, guidage libre du véhicule à la position théorique du véhicule,
- faible largeur de la bande de circulation, guidage strict du véhicule à la position théorique du véhicule,
- grande largeur de la bande de circulation, guidage libre du véhicule à la position théorique du véhicule,
- déport élevé de la position réelle du véhicule de sa position théorique dans la bande de circulation, guidage strict du véhicule à la position théorique du véhicule,
- faible déport de la position réelle du véhicule de sa position théorique dans la bande de circulation, guidage libre du véhicule à la position théorique du véhicule,
- température extérieure inférieure à zéro degré, guidage strict du véhicule à la position théorique du véhicule,
- température extérieure supérieure à zéro degré, guidage libre du véhicule à la position théorique du véhicule,
- véhicule en dépassement de l'arrière ou sur le côté ou à hauteur du véhicule, guidage strict du véhicule à la position théorique du véhicule,
- chantier imminent, guidage strict du véhicule à la position théorique du véhicule,
- tracé sinueux de la route imminent, guidage strict du véhicule à la position théorique du véhicule,
- tracé rectiligne de la route imminent, guidage libre du véhicule à la position théorique du véhicule,
- chaussée humide, guidage strict du véhicule à la position théorique du véhicule,
- mauvaise visibilité, guidage strict du véhicule à la position théorique du véhicule,
- vent fort, guidage strict du véhicule à la position théorique du véhicule,
- objet en saillie sur le bord de la route, guidage strict du véhicule à la position théorique du véhicule.

5. Système de guidage transversal selon l'une quelconque des revendications précédentes, **caractérisé en ce que**, lors de la détection des valeurs de plusieurs grandeurs pour la détermination du régulateur ou de l'ensemble de paramètres, les valeurs sont utilisées sous forme pondérée dans la sélection du régulateur, de telle manière que le système de sélection de régulateur (16) calcule les grandeurs détectées, en fonction de la pondération des grandeurs, avec la pondération en valeurs pondérées, détermine une valeur totale à partir des valeurs pondérées, et définisse à partir de celles-ci le régulateur à utiliser.

6. Système de guidage transversal selon l'une quelconque des revendications précédentes, **caractérisé en ce que**, lors de la détection des valeurs de plusieurs grandeurs, le système de sélection de régulateur (16) utilise un réseau neuronal artificiel pour la détermination du régulateur ou de l'ensemble de paramètres.

7. Système de guidage transversal selon l'une quelconque des revendications précédentes, **caractérisé en ce que**, lors du transfert d'un régulateur ou d'un ensemble de paramètres, qui provoque un guidage libre du véhicule à la position théorique du véhicule, à un régulateur ou à un ensemble de paramètres qui provoque un guidage strict du véhicule à la position théorique du véhicule, une commutation directe des régulateurs ou des ensembles de paramètres est effectuée par le système de sélection de régulateur (16).

8. Système de guidage transversal selon l'une quelconque des revendications précédentes, **caractérisé en ce que**, lors du transfert d'un régulateur ou d'un ensemble de paramètres, qui provoque un guidage strict du véhicule à la position théorique du véhicule, à un régulateur ou à un ensemble de paramètres, qui provoque un guidage libre du véhicule à la position théorique du véhicule, le système de régulateur (16) commute pour un temps pouvant être prédéfini Dt un signal de réglage modifié sur l'actionneur de direction (15) et **en ce qu'**après l'expiration du temps Dt, le système de régulateur (14) utilise le régulateur ou l'ensemble de paramètres, qui provoque un guidage libre du véhicule à la position théorique du véhicule, pour la formation du signal de réglage.

9. Système de guidage transversal selon la revendication 8, **caractérisé en ce que** la modification du signal de réglage est effectuée de telle manière qu'à l'intérieur du temps Dt, on simule un transfert progressif de la caractéristique de régulation du régulateur ou de l'ensemble de paramètres, qui provoque un guidage strict du véhicule à la position théorique du véhicule, à la caractéristique de régulation du régulateur ou de l'ensemble de paramètres, qui provoque un guidage libre du véhicule à la position théorique du véhicule.

10. Système de guidage transversal selon une revendication 8 ou 9, **caractérisé en ce que** l'on détermine le temps Dt en fonction de la valeur d'au moins une grandeur détectée.

11. Système de guidage transversal selon l'une quelconque des revendications 2 à 10, **caractérisé en ce que** des plages de valeurs sont prédéfinies pour une ou plusieurs grandeur(s) dans le système de sélection de régulateur (16) et **en ce que** le système de sélection de régulateur (16) sélectionne deux régulateurs ou deux ensembles de paramètres, lorsque la ou les valeur(s) de ladite une ou desdites plusieurs grandeur(s) détectée(s) se situe(nt) dans la plage de valeurs prédéfinie, et l'unité de modification du signal de réglage (19) forme un signal de réglage modifié par interpolation entre les signaux de réglage des deux régulateurs et l'applique à l'actionneur de direction (15).

12. Système de guidage transversal selon l'une quelconque des revendications précédentes, **caractérisé en ce qu'**il est prévu un moyen d'entrée (20) utilisable par le conducteur (2) du véhicule et agissant sur le système de sélection de régulateur (16), au moyen duquel la sélection du régulateur ou de l'ensemble de paramètres peut être influencée.

13. Système de guidage transversal selon la revendication 12, **caractérisé en ce que** le moyen d'entrée utilisable par le conducteur (2) du véhicule agit en formant une tendance.

14. Véhicule, en particulier véhicule utilitaire, qui comprend un système de guidage transversal selon l'une quelconque des revendications précédentes.

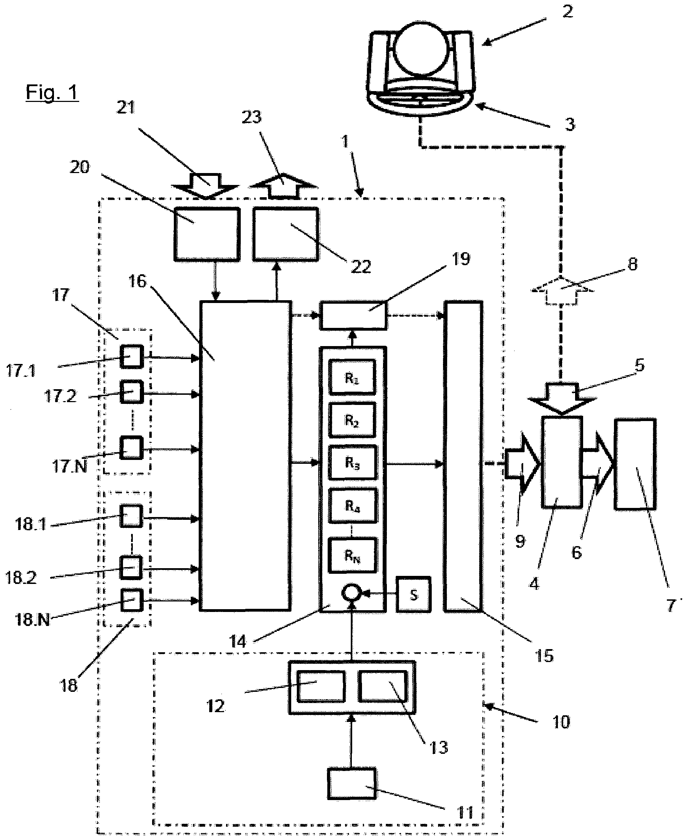

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10210548 A1
- US 20110231063 A1